# EUROPEAN PATENT SPECIFICATION

(11) **EP 3 326 913 B1**
(45) Date of publication and mention of the grant of the patent: **05.02.2020**
(21) Application number: 16382553.2
(22) Date of filing: 24.11.2016
(51) Int. Cl.: B64D 9/00, B60P 7/08

(54) **ANTI-RATTLING DEVICE FOR PALLETS IN CARGO AIRCRAFT**
ANTIRASSELVORRICHTUNG FÜR PALETTEN IN FRACHTFLUGZEUG
DISPOSITIF ANTI-BALLOTEMENT DE PALETTES DANS AÉRONEF CARGO

(43) Date of publication of application: 30.05.2018
(73) Proprietor: Airbus Defence and Space, S.A.U., 28906 Getafe - Madrid (ES)
(72) Inventor: CONEJERO MORENO, Federico, 28906 Getafe - Madrid (ES); GARCÍA FEIJOO, Unai, 28906 Getafe - Madrid (ES)
(74) Representative: ABG Intellectual Property Law, S.L.

(56) References cited:
- WO-A1-2009/094978
- US-A- 3 800 713
- US-A- 4 372 715

## Description

### TECHNICAL FIELD OF THE INVENTION

The present invention belongs to the field of cargo aircraft payload restraint systems and, more particularly, to the field of anti-rattling restraint devices and/or systems for pallets in the cargo hold of an aircraft.

### BACKGROUND OF THE INVENTION

Typically, in cargo aircraft the payload is transported in pallets which are secured to the aircraft with a cargo restraint system. The restrain is usually achieved by means of two sets of latches which immobilize the pallet in three main directions of the aircraft. These latches are commonly devised to resist a rough treatment and to adapt to different kinds of load, and therefore have loose dimensional tolerances.

Document AU 2014331897 A1 describes a mechanically actuated cargo restraint system for a vehicle which includes a rotatable reel in a frame, two flexible tethers, and a mechanical device for the actuation thereof.

Document US 2015329206 A1 discloses an aircraft cargo handling system with a pair of load restraining rail assemblies, each of which has a shaft assembly running substantially parallel to the longitudinal axis of the aircraft, which enables the pallets to be locked in place sequentially by rotating the shaft assembly a predetermined angular rotation each time a pallet is loaded.

Document US 2015225083 A1 describes a cargo restraining assembly comprising two guidance and restraint bars running in parallel to each other, and at least one lateral bracket spanning between the two guidance and restraint bars and being fixedly connected to each of the two guidance and restraint bars. The lateral bracket includes a bracket foot formed integrally with the lateral bracket and a quick release mechanism configured to quick-releasably couple the bracket foot to a seat track profile of the cargo deck surface of the aircraft.

These inventions provide different ways of securing the cargo in an aircraft. But in some cases, when special equipment sensitive to shocks and vibrations is transported, or palletized seats are installed, the gaps between the cargo restraint system and the pallet must be reduced to zero in order to avoid unexpected movements and vibrations during flight.

Restraints with a nonexistent gap or a close to zero clearance can be used to overcome the rattling problem, but these kind of fixations usually require longer manipulation periods and the use of specialized tools, like screwdrivers, spanners or keys.

However, for certain applications, extended operation times are unacceptable, and therefore specific anti-rattling devices that can be easily fastened and/or released must be installed in the pallet. In addition, the restraint of the pallets in the aircraft cargo system must be done in all three main directions of the aircraft.

### SUMMARY OF THE INVENTION

The present invention provides an alternative solution for the aforementioned problems, by an anti-rattling device for the fastening of pallets in cargo aircraft restrain systems according to claim 1 and an anti-rattling system according to claim 13. In dependent claims, preferred embodiments of the invention are defined.

In a first inventive aspect, the invention provides an *anti-rattling device for the fastening of pallets in cargo aircraft restrain systems, comprising:*
*a frame body, suitable for being attached to a pallet, the frame body comprising an upper side, lateral sides, a first and a second slot sets positioned on said lateral sides, wherein the first slot set is in a substantially inclined position relatively to the second slot set,*
*a first and a second shaft, configured to slide along the first and second slot sets respectively, a threaded stud,*
*a lever, configured to move between a retracted position, and a deployed position, comprising a first end, a second end and a lever slot substantially positioned on the second end of the lever, locking means positioned on the upper side of the frame body, and*
*elastic means,*
*wherein*
*the threaded stud is connected to the second shaft, and it is further connected to the frame body by the locking means,*
*the lever is connected to the frame body by the first and second shafts, and it is further connected to the threaded stud by the second shaft said first and second shafts being connected there between by the elastic means,*
*the lever is configured to slide along the first slot set and to pivot around the first shaft, and the second shaft is configured to slide along the lever slot,*
*so that, when in use, upon the application of a rotational movement on the locking means, the locking means providing a screwing interconnection between the threaded stud and the frame body, the threaded stud pushes down the second shaft and moves the lever from the retracted position to the deployed position, causing the anti-rattling device to lock the pallet to the cargo restrain system.*

Unless defined otherwise, all technical terms used herein have the same meaning as commonly understood to one of ordinary skill in the art to which this disclosure belongs.

Throughout this entire document, the *frame body* will be understood as a frame suitable for housing the parts of the device and relating the device to external elements, e.g. the cargo pallet, the aircraft hold or a cargo latch. A further use of the frame body is to provide a mounting for the shafts, the locking means and the stud.

The *lever* should be understood as a mechanical element, essentially elongated, suitable for transmitting stresses to the frame body of the device, and to perform rotational and longitudinal movements. The lever comprises two ends, first or outer end, and second or inner end, according to its position in relation to the frame body, and a substantially central portion between said ends.

The *locking means* will be understood as any type of device configured to retain the lever in a deployed or retracted position.

Throughout this document *pallet* will be understood as any element suitable for carrying bulky and/or heavy loads, preferably a board or frame with standardized dimensions, such as an IATA ULD pallet or a 463L master pallet.

Advantageously, the locking means restrain the threaded stud in a position such that the outer end of the lever remains deployed against a fixed element, also known as deployed position; and the threaded stud is released upon actuation of the operator. Furthermore, the locking means are also capable of restraining the threaded stud in a position such that the outer end of the lever remains retracted inside of the frame body, also known as retracted position.

Elastic means such a spring are arranged between the first and second shafts, providing an elastic force either tending to bring both shafts together, or to set them apart, depending on the properties of the spring, the effect being a net force tending to keep the lever in one of the stablished positions. Furthermore, the elastic means help controlling the movement of the lever. Also, the elastic means help controlling suppressing the gap between the roller and a cargo latch.

*The lever is configured to slide along the first slot set and to pivot around the first shaft, and the second shaft is configured to slide along the lever slot.*

Advantageously, the lever performs two movements upon actuation of the operator, a sliding movement along the first slot set and a pivoting movement around the first shaft, fitted in the central portion of the lever; furthermore, the lever is capable of a longitudinal sliding movement along the lever slot as a result of the sliding connection between the second shaft and the lever slot.

*The lever is configured to move between a retracted position, and* a *deployed position.*

Advantageously, the movements of the lever result in a displacement of the outer end of the lever outwards of the frame body until gets in contact with a cargo latch, and then upwards, where the lever is subsequently immobilized by the threaded stud, hence reducing the gap between the lever and the latch to zero.

In a particular embodiment, *the two ends of the lever define two respective misaligned longitudinal axes which intersect in a substantially central portion of the lever.*

Advantageously, a bent configuration of the lever enables the contact with the latch with a shorter movement of the stud, or otherwise enables a smaller frame body thanks to a more convenient positioning of the outer end of the lever.

In a particular embodiment, *the first shaft fits in a through hole positioned substantially on the intersection of the two misaligned axes of the lever.*

Advantageously, the first shaft is fitted in the through hole, positioned in the central portion of the lever, thus defining a fulcrum capable of sliding along the first set of slots.

In a particular embodiment, *the lever comprises a roller positioned on its first end.*

Advantageously, the roller ensures a smooth contact with the latch. This roller can be made of a slightly deformable or soft material, such as rubber or a polymer.

In a particular embodiment, *the locking means are configured to lock the lever either in its retracted position, or in its deployed position.*

Advantageously, the locking means cause the lever to remain in a deployed position without the intercourse of an operator for long periods, e.g. during flight, or to remain in a retracted position while downloading the pallet. Hence, the loading operations can be performed by a single person.

In a particular embodiment, *the locking means comprise a hollow tubular threaded part, configured to fit in a through hole of the upper side of the frame body.*

The locking means perform a further function by providing a screwing interconnection between the threaded stud and the frame body. Therefore the locking means actuate directly on the threaded stud by impeding its movements.

In a particular embodiment, *the threaded stud, configured to fit in the hollow tubular threaded part of the locking means, comprises a threaded cylindrical body and one end with a through hole connected to the second shaft.*

Advantageously, the application of a rotational movement on the locking means involve a vertical movement of the stud which in turn pushes down or pulls up the second shaft and moves the lever. The end of the stud with a through hole connected to the second shaft will be conveniently referred to as lower end of the stud, or simply lower end.

*The first slot set is in a substantially inclined position relatively to the second slot set.*

Advantageously, a non-parallel, non-perpendicular, or oblique arrangement of the first and second slot sets enables simultaneous vertical and horizontal movements of the lever.

In a particular embodiment, *the locking means further comprise initiating means configured to move the threaded stud.*

Advantageously, the initiating means provide a single actuation mechanism for the device, procuring control and driving force.

In a particular embodiment, *the initiating means comprise a hand-operable wheel, configured to produce a linear movement on the threaded stud.*

Advantageously, the initiating means comprise a hand-operated wheel or handle which enables the user to provide a vertical movement to the threaded stud through the locking means.

In a second inventive aspect, the invention provides an anti-rattling system comprising *one or more anti-rattling devices and* a *set of fixed latches.*

As it has been already mentioned, this invention is suitable for being used in a pre-existing cargo restrain system; therefore, in this document *latch* should be understood as any fixed element, part of said restrain system, which connects the cargo items to the aircraft hold. Advantageously, the latch is a hook or clamp, shaped as an inverted L, fastened to the aircraft floor. Advantageously, more than one anti-rattling devices conveniently placed provide a safe restrain mechanism for a pallet in at least two directions.

All the features described in this specification (including the claims, description and drawings) and/or all the steps of the described method can be combined in any combination, with the exception of combinations of such mutually exclusive features and/or steps. The true scope of the invention is defined by the wording of the appended claims.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figures 1a-1b: These figures show a full view of a preferred embodiment of the device and a full view of the core of the device.
- Figures 2a-2b: These figures show a cross section view of a preferred embodiment of the device and a cross section view of the core of the device.
- Figures 3a-3c: These figures show a cross section side view (A-A), a cross section top view (B-B) and a top view of the anti-rattling device.
- Figures 4a-4d: These figures show four operating positions of the anti-rattling device.
- Figure 5: This figure shows a pallet restraint system as known in the prior art, including a latch and a pallet.
- Figure 6: This figure shows a plurality of anti-rattling devices, placed in a pallet.

### DETAILED DESCRIPTION OF THE INVENTION

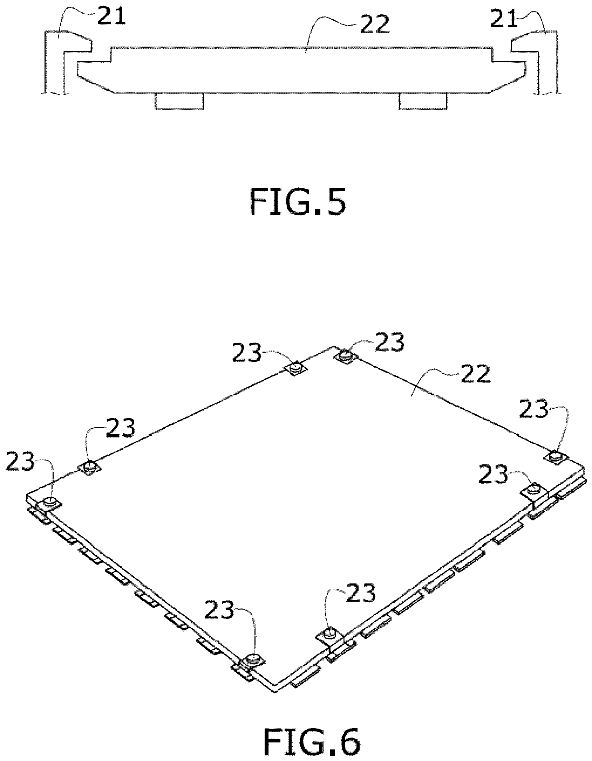

Figure 5 shows the known prior art in the field of pallet (22) restrain systems. In its simplest embodiment, it comprises the pallet (22) itself, and a set of latches (21) anchored to the aircraft cargo hold.

The present invention refers to a device (23) to avoid rattling which overcomes the problems of the prior art by reducing the gap between the latches (21) of a cargo restraint system (20) in an aircraft and a pallet (22) in two directions. When more than one device (23) is installed in a non-parallel disposition in a cargo restraint system (20), the gap is reduced between the latches (21) and a pallet (22) in three directions.

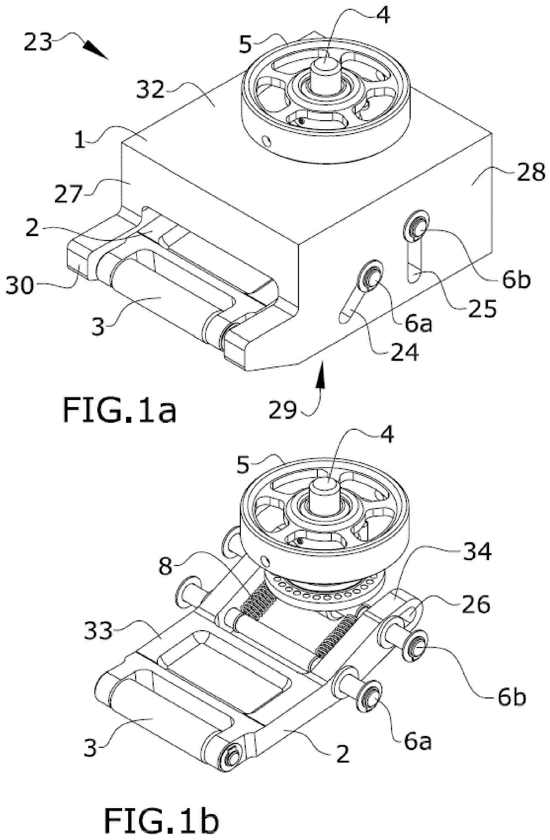

Figure 1a shows an embodiment of the device (23), where some of its components can be seen, namely the frame body (1), the initiating means (5), the roller (3), the lever (2), the first shaft (6a) and the second shaft (6b), the first slot set (24) and the second slot set (25). Figure 1b shows the device (23), with the frame body (1) removed in order to distinguish the elements placed inside the frame body (1) or core of the device (23). In addition to the above mentioned elements, Figure 1b further shows the locking means (7) and the elastic means (8).

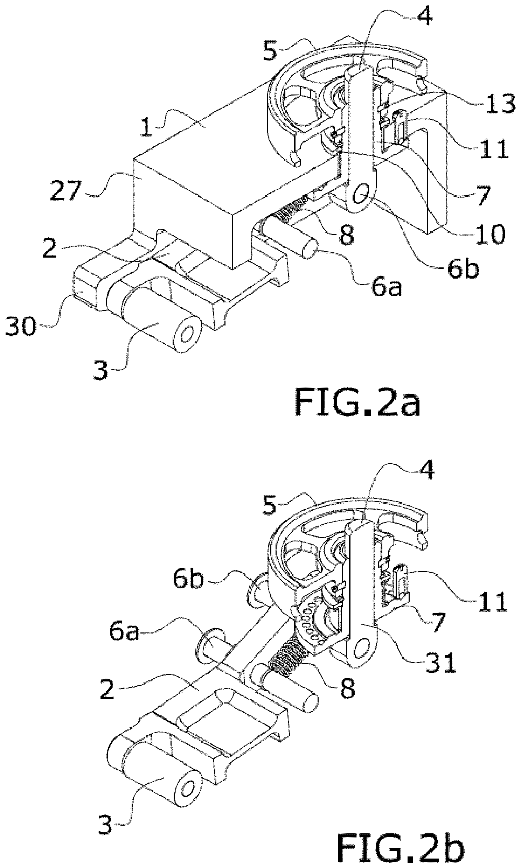

Figures 2a and 2b show a cross section view of the device (23) showing the internal arrangement of the elements and the relations there between:
- The lever (2) is connected with the frame body (1) through the first shaft (6a) and the first slot set (24).
- The lever (2) is further connected to the lower end (31) of the threaded stud (4) by means of the second shaft (6b), which slides along the lever slot (26).
- The stud (4) is connected to the frame body (1) through the locking means (7), being displaceable up and down by means of a turning movement of the initiating means (5).
- The first and second shafts (6a, 6b) are mutually connected with the elastic means (8).

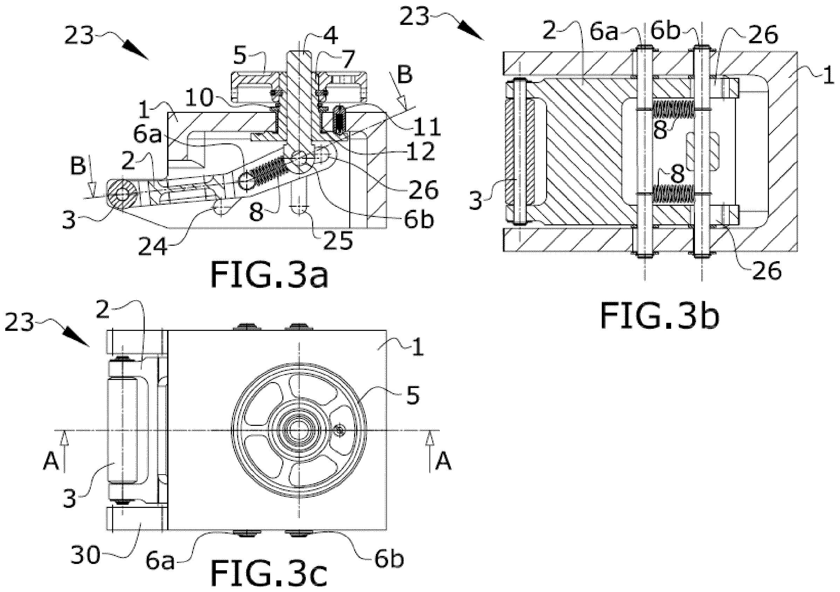

Figures 3a-3c provide further detail with a side and two top views of the device. As can be appreciated on these figures, the lever (2) is an essentially flat and elongated element, with hollow portions intended to make the lever (2) lighter. The lever (2) presents at least two through holes, one devised to fit the roller (3) in the outer end (33) of the lever (2), and the other in the central portion of the lever (2), to fit the first shaft (6a). In the inner end (34) of the lever (2), a lever slot (26) provides a linkage for the lower end (31) of the threaded stud (4). Furthermore, the lever (2) shows a bend in its central portion, where the second through hole is located. The bend enables the outer end of the lever (2) to easily reach the latch (21), without a large frame body (1) and/or a long stud (4). Preferably, the lever (2) is made of a material such as steel, composite materials, polymers or similar.

The frame body (1) is an essentially hollow element, suitable for being attached to the pallet (22) and for housing part or all the elements of the device. In the embodiment shown in Figs. 1-4, the frame body (1) is shaped like a rectangular prism or box, with an open lower side (29) and a partially open front side (27). Two essentially trapezoidal protrusions (30) extend outwards in the lower part of the front side (27), the protrusions (30) being devised to partially cover the outer end of the lever (2) on its retracted position. Furthermore, the two sets of slots (24, 25) are opened in the lateral sides (28) of the frame body (1), the second slot set (25) being substantially vertical, and the first slot set (24) being substantially inclined with respect to the second slot set (25). The shafts (6a, 6b) are capable of sliding along the first and second slot sets (24, 25), respectively, and are fastened to the frame body (1) with the help of retaining rings. The first (6a) and second (6b) shafts are mutually connected my means of the elastic means (8), a set of two springs in this embodiment, which helps keeping the position of the lever (2) and avoids unintended movements thereof.

The second shaft (6b) is also capable of sliding along the lever slot (26), the second shaft (6b) being further connected to the threaded stud (4). In this embodiment, the stud (4) is a threaded bolt, with its lower end (31) configured to be connected to the second shaft (6b). The threaded portion of the stud (4) is devised to fit in the locking means (7), which is threaded inside. The locking means (7) comprise a set of retainers (11, 13), a washer (10), a bushing (12) and a substantially annular, flat element with openings, adapted to impede the rotation of the locking means (7), therefore locking the vertical movement of the stud (4). In a preferred embodiment, a ball retainer (11) is placed in the locking means (7), in such a way that fits in the openings of the flat element. The bushings (12) provide a sliding interface between the frame body (1) and the stud (4). In order to provide a rotating motion to the locking means (7), initiating means (5) are fitted outside the locking means (7); in a preferred embodiment, these initiating means (5) are a simple hand-operated wheel or handle which enable the operator to control and actuate the device.

The claimed device (23) is preferably placed in an opening of the pallet (22), substantially on the edge of the pallet (22); the anti-rattling device (23) is mechanically joined to the pallet (22) by conventional means, such as bolts, nails, by welding or using adhesives.

### Operation Method

Once the pallet (22) is placed in the designated position, a hand-operated wheel is turned by an operator; the hand-operated wheel produces a rotation of the locking means (7), which moves the threaded stud (4) up or down depending on the rotation direction. When the stud (4) moves down, it pushes the second shaft (6b) and hence the lever (2) pivots around the first shaft (6a), and the roller (3) on the outer end of the lever (2) moves up until it reaches the horizontal flange of the XZ or the YZ latch (21). When the hand-operated wheel is rotated even more, the stud (4) still goes down, but due to the effect of the inclined first slot set (24), the roller (3) moves then horizontally until it reaches the vertical face of the XZ or the YZ latch (21). In that position the locking means (7) get locked and the gaps between the pallet (22) and the cargo restraint system (20) are reduced to zero.

When the pallet (22) has to be manipulated, the anti-rattling device (23) can be retracted in order to avoid any accidental contact with an external element or with the cargo loading system (20) itself; the hand-operated wheel is rotated until the second shaft (6b) reaches the upper end of the second slot set (25) and the stud (4) is subsequently locked.

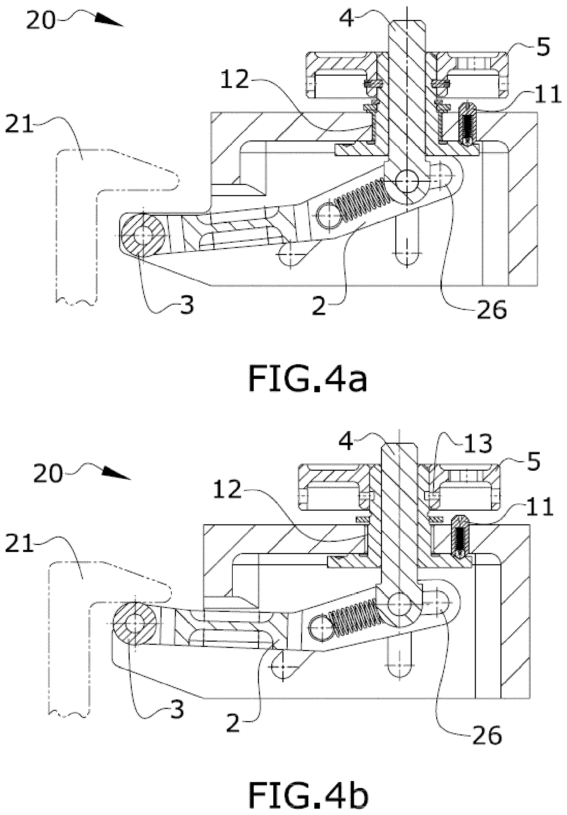

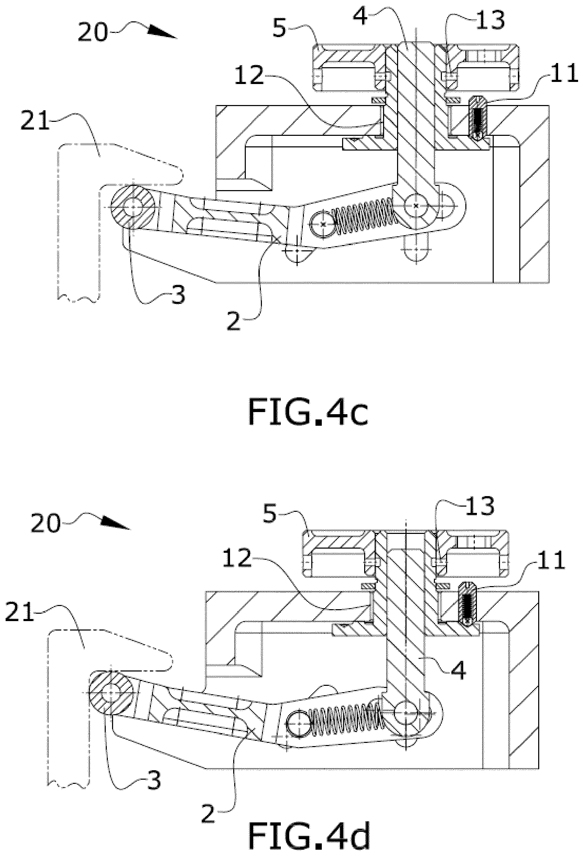

Figs. 4a-4d show the operation sequence:
- in Fig. 4a the anti-rattling device (23) is in the initial retracted position;
- when it is desired to fasten the pallet (22) to the cargo loading system (20), the operator turns the hand-operated wheel, as shown in Fig. 4b, producing a pivoting movement of the lever (2), until the roller (3) comes into contact with the horizontal flange of the latch (21),
- when this position is reached, the roller (3) cannot displace upwards any longer, and a further rotation of the hand-operated wheel produces a horizontal displacement of the roller (3), as seen on Fig. 4c,
- the hand-operated wheel can be turned until the roller (3) comes into contact with vertical face of the latch (21), and the anti-rattling device (23) is finally locked, as shown in Fig. 4d.

## Claims

1. An anti-rattling restraint device (23) for the fastening of pallets (22) in cargo aircraft restrain systems, comprising:
a frame body (1), suitable for being attached to a pallet, the frame body (1) comprising an upper side (32), lateral sides (28), a first and a second slot sets (24, 25) positioned on said lateral sides (28), wherein the first slot set (24) is in a substantially inclined position relatively to the second slot set (25),
a first and a second shaft (6a, 6b), configured to slide along the first and second slot sets (24, 25) respectively,
a threaded stud (4),
a lever (2), configured to move between a retracted position, and a deployed position, comprising a first end (33), a second end (34) and a lever slot (26) substantially positioned on the second end (34) of the lever (2),
locking means (7) positioned on the upper side (32) of the frame body (1), and elastic means (8),
wherein
the threaded stud (4) is connected to the second shaft (6b), and it is further connected to the frame body (1) by the locking means (7),
the lever (2) is connected to the frame body (1) by the first and second shafts (6a, 6b), and it is further connected to the threaded stud (4) by the second shaft (6b), said first and second shafts (6a, 6b) being connected there between by the elastic means (8),
the lever (2) is configured to slide along the first slot set (24) and to pivot around the first shaft (6a), and the second shaft (6b) is configured to slide along the lever slot (26), so that, when in use, upon the application of a rotational movement on the locking means (7), the locking means (7) providing a screwing interconnection between the threaded stud (4) and the frame body (1), the threaded stud (4) pushes down the second shaft (6b) and moves the lever (2) from the retracted position to the deployed position, causing the anti-rattling device (23) to lock the pallet (22) to the cargo restrain system.

2. An anti-rattling restraint device (23) according to any of the preceding claims, wherein the two ends (33, 34) of the lever (2) define two respective misaligned longitudinal axes which intersect in a substantially central portion of the lever (2).

3. An anti-rattling restraint device (23) according to any of the preceding claims, wherein the first shaft (6a) fits in a through hole positioned substantially on the intersection of the two misaligned axes of the lever (2).

4. An anti-rattling restraint device (23) according to any of the preceding claims, wherein the lever (2) comprises a roller (3) positioned on its first end (33).

5. An anti-rattling restraint device (23) according to any of claims 1 to 4, wherein the locking means (7) are configured to lock the lever (2) either in its retracted position, or in its deployed position.

6. An anti-rattling restraint device (23) according to any of the preceding claims, wherein the locking means (7) comprise a hollow tubular threaded part, configured to fit in a through hole of the upper side (32) of the frame body (1).

7. An anti-rattling restraint device (23) according to the preceding claim, wherein the threaded stud (4), configured to fit in the hollow tubular threaded part of the locking means (7), comprises a threaded cylindrical body and one end with a through hole connected to the second shaft (6b).

8. An anti-rattling restraint device (23) according to any of the preceding claims, wherein the locking means (7) further comprise initiating means (5) configured to move the threaded stud (4).

9. An anti-rattling restraint device (23) according to the preceding claim, wherein the initiating means (5) comprise a hand-operable wheel, configured to produce a linear movement on the threaded stud (4).

10. Anti-rattling restraint system (20) comprising one or more anti-rattling devices (23) according to of any of the preceding claims and a set of fixed latches (21).

## Patentansprüche

1. Antirassel-Arretiervorrichtung (23) zum Befestigen von Paletten (22) in Frachtflugzeug-Arretier-Systemen, aufweisend:
einen Rahmenkörper (1), der für die Anbringung an einer Palette geeignet ist, wobei der Rahmenkörper (1) eine Oberseite (32), Lateralseiten (28), eine erste und zweite Menge an Schlitzen (24, 25), die an den Lateralseiten (28) positioniert sind, aufweist, wobei die erste Menge an Schlitzen (24) sich in einer bezüglich der zweiten Menge an Schlitzen (25) im Wesentlichen geneigten Position befindet,
einen ersten und einen zweiten Schaft (6a, 6b), die eingerichtet sind, entlang der ersten bzw. zweiten Menge an Schlitzen (24, 25) zu gleiten, einen Gewindebolzen (4),
einen Hebel (2) der eingerichtet ist, sich zwischen einer eingefahrenen Position und einer ausgefahrenen Position zu bewegen, aufweisend ein erstes Ende (33), ein zweites Ende (34) und einen Hebelschlitz (26), der im Wesentlichen am zweiten Ende (34) des Hebels (2) positioniert ist, Verriegelungsmittel (7), die an der Oberseite (32) des Rahmenkörpers (1) positioniert sind, und elastische Mittel (8),
wobei
der Gewindebolzen (4) mit dem zweiten Schaft (6b) verbunden ist, und ferner durch das Verriegelungsmittel (7) mit dem Rahmenkörper (1) verbunden ist,
der Hebel (2) durch den ersten und zweiten Schaft (6a, 6b) mit dem Rahmenkörper (1) verbunden ist, und ferner durch den zweiten Schaft (6b) mit dem Gewindebolzen (4) verbunden ist, wobei der erste und zweite Schaft (6a, 6b) durch das elastische Mittel (8) zwischen diesen verbunden sind,
der Hebel (2) eingerichtet ist, um entlang der ersten Menge an Schlitzen (24) zu gleiten und um den ersten Schaft (6a) herum zu verschwenken, und der zweite Schaft (6b) eingerichtet ist, um entlang des Hebelschlitzes (26) zu gleiten;
so dass, in Gebrauch, bei Aufbringen einer Drehbewegung auf das Verriegelungsmittel (7), das Verriegelungsmittel (7) eine Schraubverbindung zwischen dem Gewindebolzen (4) und dem Rahmenkörper (1) bereitstellt, der Gewindebolzen (4) den zweiten Schaft (6b) nach unten drückt und den Hebel (2) aus der eingefahrenen Position in die ausgefahrene Position bewegt, was die Antirasselvorrichtung (23) veranlasst, die Palette (22) an dem Frachtarretier-System zu verriegeln.

2. Antirassel-Arretiervorrichtung (23) nach einem der vorstehenden Ansprüche, wobei die zwei Enden (33, 34) des Hebels (2) zwei jeweils fehlausgerichtete Längsachsen definieren, die sich in einem im Wesentlichen mittleren Abschnitt des Hebels (2) schneiden.

3. Antirassel-Arretiervorrichtung (23) nach einem der vorstehenden Ansprüche, wobei der erste Schaft (6a) in eine Durchgangsöffnung passt, die im Wesentlichen an der Überschneidung der beiden fehlausgerichteten Achsen des Hebels (2) positioniert ist.

4. Antirassel-Arretiervorrichtung (23) nach einem der vorstehenden Ansprüche, wobei der Hebel (2) eine Rolle (3) aufweist, die an seinem ersten Ende (33) positioniert ist.

5. Antirassel-Arretiervorrichtung (23) nach einem der Ansprüche 1 bis 4, wobei die Verriegelungsmittel (7) eingerichtet sind, den Hebel (2) entweder in seiner eingefahrenen Position oder in seiner ausgefahrenen Position zu verriegeln.

6. Antirassel-Arretiervorrichtung (23) nach dem vorstehenden Anspruch, wobei die Verriegelungsmittel (7) einen hohlen, röhrenförmigen Gewindeteil aufweisen, der eingerichtet ist, in ein Durchgangsloch der Oberseite (32) des Rahmenkörpers (1) zu passen.

7. Antirassel-Arretiervorrichtung (23) nach dem vorstehenden Anspruch, wobei der Gewindebolzen (4), der eingerichtet ist, in den hohlen, röhrenförmigen Teil der Verriegelungsmittels (7) zu passen, einen zylindrischen Gewindekörper und ein Ende mit einem mit dem zweiten Schaft (6b) verbundenen Durchgangsloch aufweist.

8. Antirassel-Arretiervorrichtung (23) nach einem der vorstehenden Ansprüche, wobei die Verriegelungsmittel (7) ferner Wirkmittel (5) aufweisen, die eingerichtet sind, den Gewindebolzen (4) zu bewegen.

9. Antirassel-Arretiervorrichtung (23) nach dem vorstehenden Anspruch, wobei die Wirkmittel (5) ein von Hand bedienbares Rad aufweisen, das zum Erzeugen einer Linearbewegung an dem Gewindebolzen (4) eingerichtet ist.

10. Antirassel-Arretier-System (20), aufweisend eine oder mehr Antirassel-Vorrichtungen (23) nach einem der vorstehenden Ansprüche und eine Menge fester Riegel (21).

## Revendications

1. Un dispositif de retenue (23) anti-ballotement pour la fixation de palettes (22) dans des systèmes de retenue d'aéronef cargo, comprenant :
un corps (1) formant châssis, approprié pour être fixé à une palette, le corps (1) formant châssis comprenant un côté supérieur (32), des côtés latéraux (28), un premier et un deuxième ensembles de fentes (24, 25) positionnés sur lesdits côtés latéraux (28), le premier ensemble de fentes (24) étant dans une position sensiblement inclinée par rapport au deuxième ensemble de fentes (25),
un premier et un deuxième axes (6a, 6b) configurés pour coulisser le long des premier et deuxième ensembles de fentes (24, 25) respectivement,
un goujon fileté (4),
un levier (2), configuré pour être déplacé entre une position rétractée et une position déployée, comprenant une première extrémité (33), une deuxième extrémité (34) et une fente de levier (26) sensiblement positionnée sur la deuxième extrémité (34) du levier (2),
des moyens de verrouillage (7) positionnés sur le côté supérieur (32) du corps (1) formant châssis et des moyens élastiques (8),
le goujon fileté (4) est relié au deuxième axe (6b), et étant en outre relié au corps (1) formant châssis par les moyens de verrouillage (7),
le levier (2) est relié au corps (1) formant châssis par les premier et deuxième axes (6a, 6b), et il est en outre relié au goujon fileté (4) par le deuxième axe (6b), lesdits premier et deuxième axes (6a, 6b) étant reliés entre ceux-ci par les moyens élastiques (8),
le levier (2) est configuré pour coulisser le long du premier ensemble de fentes (24) et pour pivoter autour du premier axe (6a), et le deuxième axe (6b) est configuré pour coulisser le long de la fente de levier (26),
de sorte que, au cours de l'utilisation, lors de l'application d'un mouvement de rotation sur les moyens de verrouillage (7), les moyens de verrouillage (7) assurent une interconnexion de vissage entre le goujon fileté (4) et le corps (1) formant châssis, le goujon fileté (4) pousse le deuxième axe (6b) vers le bas et déplace le levier (2) de la position rétractée à la position déployée, amenant le dispositif (23) anti-ballotement à verrouiller la palette (22) sur le système de retenue de cargaison.

2. Un dispositif de retenue (23) anti-ballotement selon l'une quelconque des revendications précédentes, dans lequel les deux extrémités (33, 34) du levier (2) définissent deux axes longitudinaux désalignés respectifs qui se coupent dans une partie sensiblement centrale du levier (2).

3. Un dispositif de retenue (23) anti-ballotement selon l'une quelconque des revendications précédentes, dans lequel le premier axe (6a) s'insère dans un trou traversant positionné sensiblement à l'intersection des deux axes désalignés du levier (2).

4. Un dispositif de retenue (23) anti-ballotement selon l'une quelconque des revendications précédentes, dans lequel le levier (2) comprend un rouleau (3) positionné sur sa première extrémité (33).

5. Un dispositif de retenue (23) anti-ballotement selon l'une quelconque des revendications 1 à 4, dans lequel les moyens de verrouillage (7) sont configurés pour verrouiller le levier (2) soit dans sa position rétractée, soit dans sa position déployée.

6. Un dispositif de retenue (23) anti-ballotement selon l'une quelconque des revendications précédentes, dans lequel les moyens de verrouillage (7) comprennent une partie filetée tubulaire creuse, configurée pour prendre place de façon ajustée dans un trou traversant du côté supérieur (32) du corps (1) formant châssis.

7. Un dispositif de retenue (23) anti-ballotement selon la revendication précédente, dans lequel le goujon fileté (4), configuré pour prendre place de façon ajustée dans la partie filetée tubulaire creuse des moyens de verrouillage (7), comprend un corps cylindrique fileté et une extrémité avec un trou traversant relié au deuxième axe (6b).

8. Un dispositif de retenue (23) anti-ballotement selon l'une quelconque des revendications précédentes, dans lequel les moyens de verrouillage (7) comprennent en outre un moyen de commencement (5) configuré pour déplacer le goujon fileté (4).

9. Un dispositif de retenue (23) anti-ballotement selon la revendication précédente, dans lequel le moyen de commencement (5) comprend une roue actionnable à la main, configurée pour produire un mouvement linéaire sur le goujon fileté (4).

10. Un système de retenue (20) anti-ballotement comprenant un ou plusieurs dispositifs (23) anti-ballotement selon l'une quelconque des revendications précédentes et un ensemble d'organes de verrouillage (21) fixes.
